# EUROPEAN PATENT APPLICATION

(11) **EP 1 742 324 A1**
(43) Date of publication of application: **10.01.2007**
(21) Application number: 05745166.8
(22) Date of filing: 19.04.2005
(51) Int. Cl.: H02J 7/00, H02M 1/00

(54) **A POWER SUPPLY ADAPTER CAPABLE OF DISPLAYING DC OUTPUT VOLTAGE LEVEL**

(30) Priority: 23.04.2004 CN 200410031084; 23.04.2004 CN 200410037508
(71) Applicant: Golden Bridge Electech Inc., Pei-shen Keng Taipei County, Taiwan 222 (CN)
(72) Inventor: WU, Zuyu, Hsin Tien, Taipei Hsien Taiwan 231 (CN)
(74) Representative: Jeannet, Olivier
(86) International application number: PCT/CN2005/000536
(87) International publication number: WO 2005/104327

(57) **Abstract**

A power converter with an output voltage level indicating device is disclosed. The power converter includes a casing, an interior of which is disposed with a control circuit. The control circuit includes a feedback circuit and a DC-to-DC conversion circuit. The feedback circuit is coupled to the DC-to-DC conversion circuit and connected to a level-selecting terminal by at least one resistor to provide a feedback signal to the DC-to-DC conversion circuit which in turn changes the voltage level of the DC output. An output socket is formed at the casing, which is connected with the control circuit. The output socket includes a pair of power terminals and at least one level-selecting terminals. A level-selecting terminal device is connected to the output socket via an extension cable for getting the DC voltage and supplying the DC voltage to an appliance via an output terminal. A display device is provided at the casing for showing the output voltage level to the output terminal of the level-selecting terminal device.

## Description

### BACKGROUND OF THE INVENTION

### 1. Field of the Invention

The present invention relates generally to a power converter which can output different voltage levels, and in particular to a power converter capable of indicating the output voltage levels thereof.

### 2. Description of the Prior Art

Portable electronic appliances, such as mobile phone and notebook computer, play an important role in the modem world in doing business and social activities. Such portable appliances are often powered by built-in power sources, which must be constantly recharged in order to maintain operability of the portable appliances. Also, external powering is also available for most of the portable appliances, such as wall outlet, automobile electrical system including cigarette lighter socket and electrical socket regularly available in airplanes. In usually, the external powering must be converted by for example a conversion circuit made in the form of an adaptor before it can be supplied to the portable appliances.

However, the portable appliances are often operated with different working voltages and for such a reason, the general consumers that own and use two or more different portable appliances must regularly bring two or more adaptors corresponding to those portable appliances. This complicates the use of the portable appliances and is very troublesome to the consumers. US Patent No. 6,628,535, issued to the present inventor, teaches a power converter that provides selectable output voltage levels to different appliances or loads. The power converter of the '535 Patent comprises an output to which a terminal connector is selectively coupled. The terminal connector comprises a circuit comprised of resistors that generates a feedback signal to a control circuit of the power converter, inducing a corresponding voltage level at the output of the conversion device.

Such a conventional power converter works well in supplying voltage of different levels to electronic appliances that operates with different working voltages. It, however, is still unclear to a user what voltage level is being output by the power converter when the device is powering an electronic appliance. This may cause problem to the user.

Thus, the present invention is aimed to provide a power converter that overcomes the drawback of the conventional converters.

### SUMMARY OF THE INVENTION

A first object of the present invention is to provide a power converter that is capable to display the output voltage level. The power converter comprises a display device for showing the DC voltage level at the output terminal of the level-selecting terminal device so that the user can clearly indicate the DC voltage level currently output.

A second object of the present invention is to provide a portable power converter with output voltage level display device. The power converter is a portable power conversion assembly engageable with various level-selecting terminal devices. By means of a display device, the output voltage level at the output terminal of the level-selecting terminal device is shown.

A third object of the present invention is to provide a power converter having two or more output terminals and capable of indicating various voltage levels.

To achieve the above objects, in accordance with the present invention, there is provided a power converter with an output voltage level display device. The power converter includes a casing, an interior of which is disposed with a conversion control circuit. The conversion control circuit includes a feedback circuit and a DC-to-DC conversion circuit. The feedback circuit is coupled to the DC-to-DC conversion circuit and connected to a level-selecting terminal by at east one resistor. An output socket is formed at one side of the casing, which is connected with the conversion control circuit. The output socket includes a pair of power terminals and at least one level-selecting terminal. A level-selecting terminal device is connected to the output connector via an extension cable for getting the level selecting terminal device to output a convertable DC voltage. A display device is provided at the casing for showing the output voltage level to the output terminal of the level-selecting terminal device.

The working power required by the casing of the power converter can be supplied by a rechargeable battery located within the casing, or by a DC voltage via a cigarette lighter plug, or by an AC power via an AC-to-DC voltage conversion circuit.

Furthermore, the present invention also provides a power converter having a DC voltage level display circuit which can display corresponding output DC voltage level in response to different level-selecting terminals. It comprises at least a DC-to-DC conversion circuit that receives and processes a DC power input and outputs a DC at a predetermined voltage level, a DC output connector receiving the DC output and having power terminals to transmit the DC output and a plurality of level-selecting terminals, a terminal device connected to the output connector, a feedback circuit coupled to the DC-to-DC conversion circuit and connected to each level-selecting terminal to provide a feedback signal to the DC-to-DC conversion circuit which in turn changes the voltage level output by the power terminals, and a display circuit, which is coupled to the output connector to display the voltage level of the DC output at the power terminals of the output connector.

The display device of the present invention can be a plurality of indicators or a liquid crystal display device to indicate the DC output voltage levels in response to the power terminals of the DC output connector.

Compared with relevant prior arts, the present invention overcomes the common shortcomings of conventional DC output voltage conversion devices and enables the user to know the DC voltage level currently output. Moreover, when the power converter of the present invention has multiple output terminals, the user can still know clearly the DC voltage levels respectively output by the different output terminals. In addition, the working power required by the converter can be supplied by a rechargeable battery located within the casing thereby achieving the portable purpose thereof.

### BRIEF DESCRIPTION OF THE DRAWINGS

The present invention will be apparent to those skilled in the art by reading the following description of preferred embodiments thereof, with reference to the attached drawings, in which:

**Figure 1** is a perspective view of a power converter constructed in accordance with a first embodiment of the present invention with connection cables detached therefrom;

**Figure 2** is a block diagram of a voltage conversion control circuit of the power converter of **Figure 1;**

**Figure 3** is a block diagram of a DC voltage level indicating circuit of **Figure 2;**

**Figure 4** is a perspective view of a second embodiment of the power converter in accordance with the present invention;

**Figure 5** is a block diagram of the DC voltage level indicating circuit of the power converter of **Figure 4;**

**Figure 6** is a perspective view of a third embodiment of the power converter in accordance with the present invention;

**Figure 7** is a perspective view of a fourth embodiment of the power converter in accordance with the present invention;

**Figure 8** is a perspective view of a fifth embodiment of the power converter in accordance with the present invention;

**Figure 9** a block diagram of the control circuit of the power converter of **Figure 8;**

**Figure 10** is a perspective view of a sixth embodiment of the power converter in accordance with the present invention;

**Figure 11** is a perspective view of a seventh embodiment of the power converter in accordance with the present invention;

**Figure 12** is a block diagram of the control circuit of the power conversion device of **Figure 11;**

**Figure 13** is a detailed circuitry diagram showing a first-arrangement-of the control circuit of the power conversion device of **Figure 12;**

**Figure 14** is a detailed circuitry diagram showing a second arrangement of the control circuit of the power conversion device of **Figure 12;**

**Figure 15** is a detailed circuitry diagram showing a third arrangement of the control circuit of the power conversion device of **Figure 12;**

**Figure 16** is a perspective view of an eighth embodiment of the power converter in accordance with the present invention; and

**Figure 17** is a block diagram of the control circuit of the power conversion device of **Figure 16.**

### DETAILED DESCRIPTION OF THE PREFERRED EMBODIMENTS

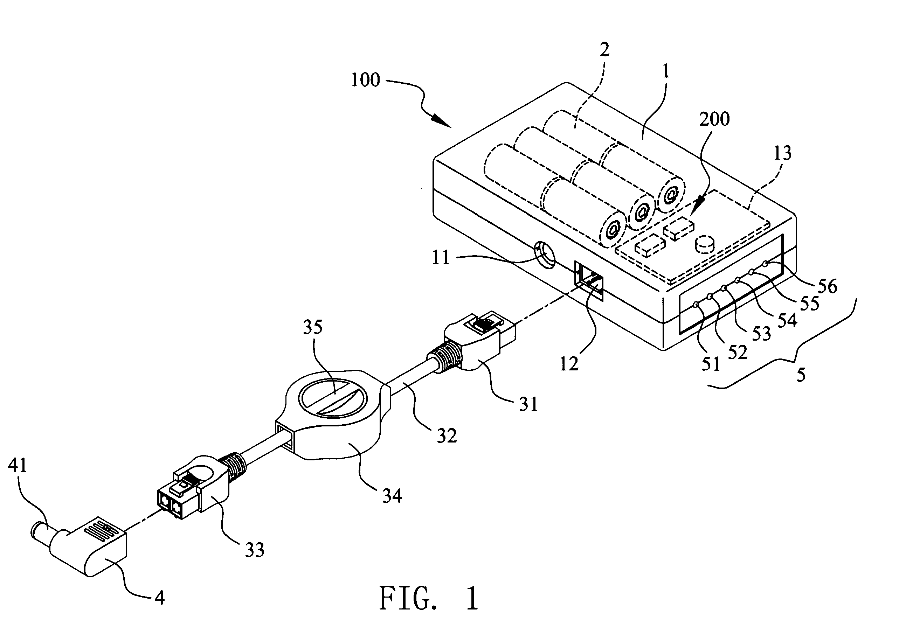

With reference to the drawings and in particular to **Figure 1,** a power converter of a first embodiment in accordance with the present invention, generally designated with reference numeral **100,** comprises a casing **1.** A plurality of rechargeable batteries **2** are disposed in an interior of the casing **1,** which is used for supplying a DC voltage.

The casing **1** is provided with an input socket **11** with which a plug of a power cord connecting to a power source (not shown) is engageable for charging the rechargeable batteries **2.** The casing **1** is formed with an output socket **12** for connecting to a device-side plug **31** at one end of an extension cable **32.** A circuit board **13** is arranged in an interior of the power converter **1,** which comprises a control circuit **200.**

The other end of the extension cable **32** is formed with an appliance-side connector **33** which is engageable with a level-selecting terminal device **4.** The level-selecting terminal device **4** is formed with an output terminal **41** for providing a selectable DC voltage output.

The extension cable **32** is releasably stowed in a cable-winding device **34** to avoid possible entangling of the extension cable **32.** A button **35** is provided on a top surface of the cable-winding device **34** for rewinding the extension cable **32.**

At an appropriate position of the casing **1,** there is disposed with a display device **5,** which is capable to indicate/display the DC output voltage level provided via the output terminal **41** of the level-selecting terminal **4.** When connecting to different level-selecting terminal device **4,** the display device **5** is able to indicate the real DC output voltage level.

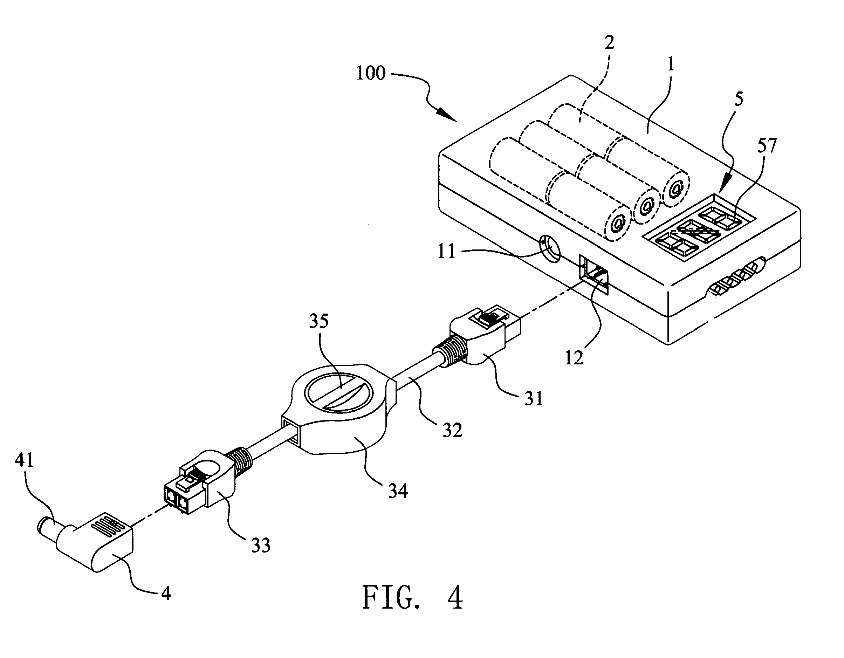

The display device **5** comprises a plurality of indicators 51∼56 for showing the DC voltage output through the output terminal **41** of the level-selecting terminal **4.** Each of the indicators corresponds to a different DC output voltage level. The user can easily know from the lighting indicator **51∼56** the real DC voltage output of the level-selecting terminal device **4.** Alternatively, the display device **5** may comprise a liquid crystal display device **57** for indicating the DC voltage output through the output terminal **41** of the level-selecting terminal device **4,** as shown in **Figure 4.**

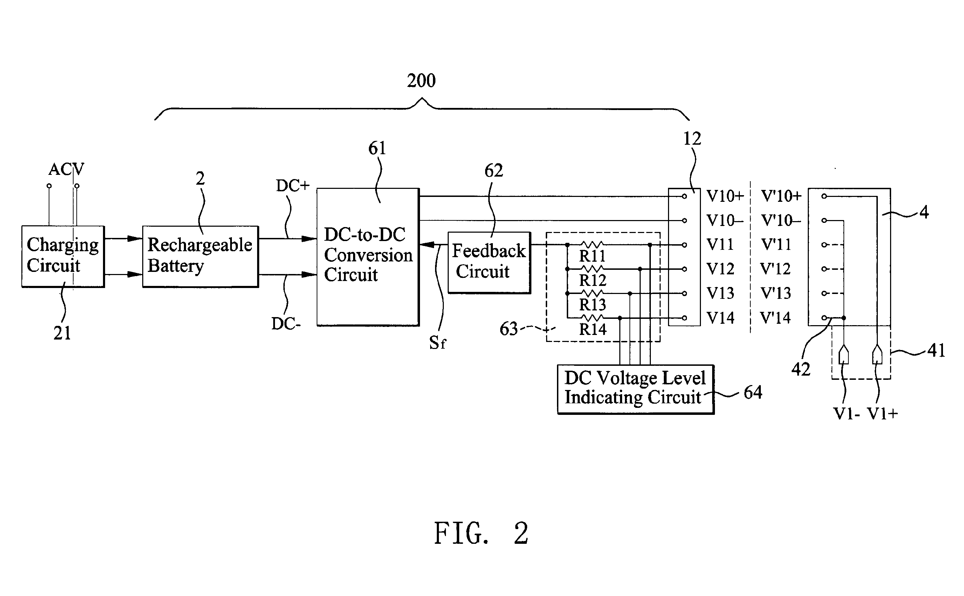

Also referring to **Figure 2,** which shows a block diagram of a control circuit of the power converter, the control circuit **200** comprises a DC-to-DC conversion circuit **61,** a feedback circuit **62,** a resistor network **63** and a DC voltage level indicating circuit **64.**

The DC output terminals **DC+, DC-** of the rechargeable batteries **2** are directly coupled to the DC-to-DC conversion circuit **61** for supplying power. The rechargeable batteries 2 are charged by an AC power **ACV** via a charging circuit **21.**

The output socket **12** comprises a pair of power terminals **V10+, V10-**and a plurality of level-selecting terminals **V11, V12, V13,** and **V14.** The resistor network **63** and the feedback circuit **62,** which are connected in series, are connected between the output socket **12** and the DC-to-DC conversion circuit **61** for generating a feedback signal **Sf to** the DC-to-DC conversion circuit **61.** The resistor network **63** is comprised of resistors **R11, R12, R13,** and **R14,** which are in turn connected respectively to the level-selecting terminals **V11, V12, V13,** and **V14** of the output socket **12.**

The DC voltage level indicating circuit **64** is connected to the level-selecting terminals **V11, V12, V13,** and **V14** of the resistor network **63.** The level-selecting terminal device **4** also comprises a pair of power terminals **V'10+, V'10-** and plural level-selecting terminals **V'11, V'12, V'13,** and **V'14,** which are respectively connected to the corresponding terminals **V10+, V10-, V11, V12, V13,** and **V14** of the output socket **12**, when the level-selecting terminal device **4** is connected to the output socket **12** by means of the extension cable **32.**

By selective use of different jump connection **42** between the level-selecting terminals **V'11, V'12, V'13,** and **V'14** and the power terminal **V'10-,** a different resistance is observed in the resistor network **63,** which changes the feedback signal **Sf** and thereby changes the output level of voltage at the output terminal **V1+, V1-** of the level-selecting terminal device **4.** The output level of voltage at output **V1+, V1-** is displayed on the display device **5** via the DC voltage level indicating circuit 64.

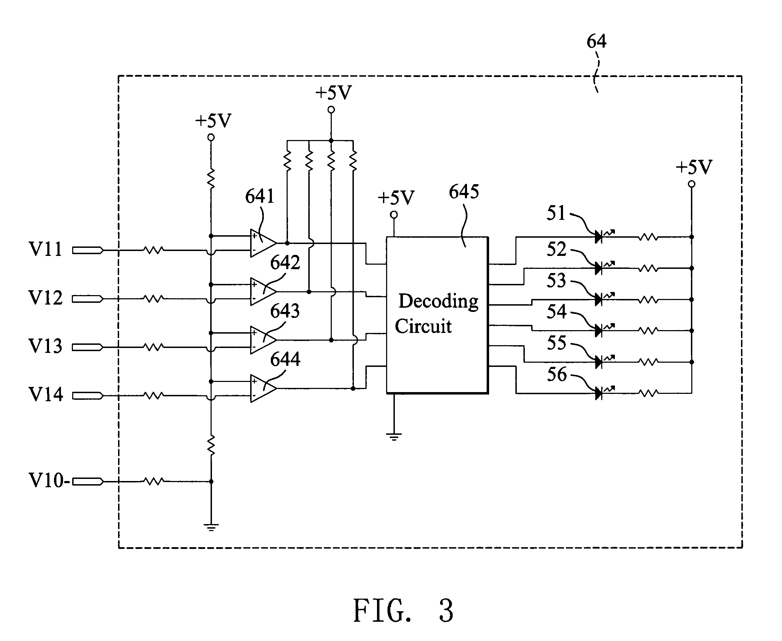

Also referring to **Figure 3,** a block diagram of the DC voltage level indicating circuit **64** is shown. The DC voltage level indicating circuit **64** comprises operational amplifiers **641, 642, 643, 644** each having a first input connected to the level-selecting terminals **V11, V12, V13,** and **V14** of the resistor network **63** whereby each operational amplifier **641, 642, 643, 644** and the associated resistor **R11, R12, R13, R14** forms a comparison circuit. Each operational amplifier **641, 642, 643, 644** has a second input connected to a power source of **+5V.** Each operational amplifier **641, 642, 643, 644** has an output coupled to and applying an output signal to a decoding circuit **645,** which in turn generates output signals applied to and driving the indicators **51∼56.** Thus, the indicators **51**∼**56** shows to a user the voltage level at the output **V1+, V1-.**

Also referring to **Figure 4,** a power converter constructed in accordance with a second embodiment of the present invention is shown. The second embodiment is substantially identical to the first embodiment with reference to **Figure 1,** except that the display device **5** comprises a liquid crystal display device **57** to replace corresponding indicators **51∼56.** The voltage level of the level-selecting terminal device **4** is displayed at the liquid crystal display **57.**

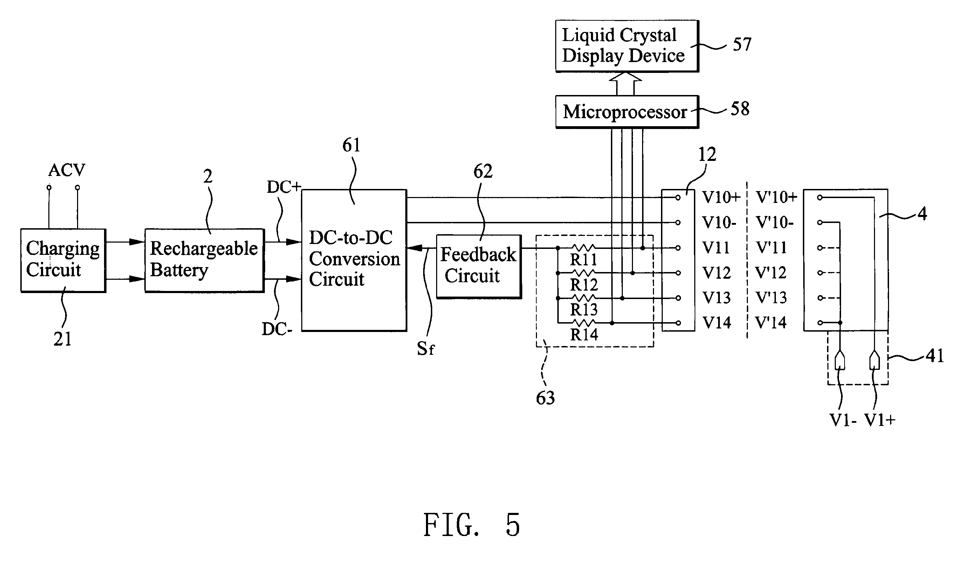

A block diagram of a control circuit of the second embodiment is shown in **Figure 5.** A microprocessor **58** is coupled, via any known interface, to the resistor network **63** to detect the voltage level. The microprocessor **58** decodes and calculates to generate a signal to control the liquid crystal display device **57** to display the voltage level thereof as well as other electrical parameters.

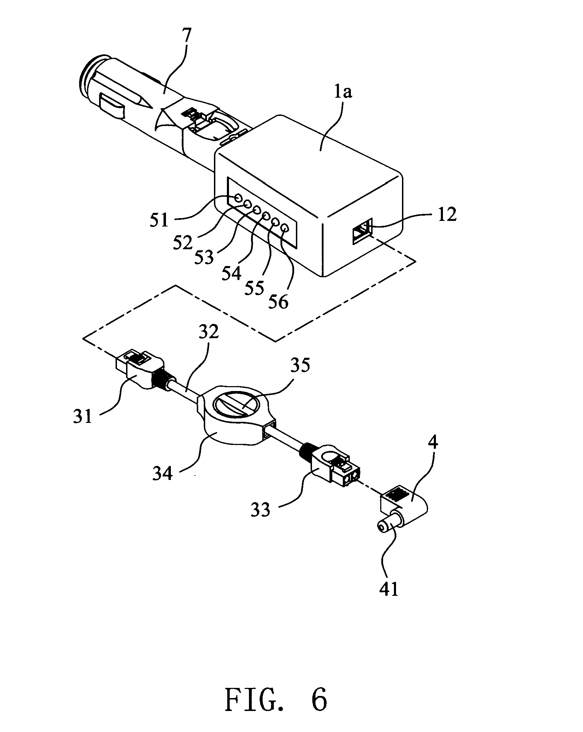

**Figure 6** shows a perspective view of a third embodiment of the power converter of the present invention. The third embodiment is substantially similar to the first and second embodiments, and like reference numerals are used to identify elements that are similar or identical in the embodiments. In the third embodiment, the casing **1a** is incorporated with a cigarette lighter plug **7** which is engageable with a standard cigarette lighter socket (not shown) provided in an automobile. The casing **1a** is formed with a plurality of indicators **51~56** for showing the DC voltage output at the output terminal **41** of the level-selecting terminal device **4.** Each of the indicators corresponds to a different DC voltage level. The user can easily know from the lighting indicator **51~56** the real DC voltage output to the level-selecting terminal device **4.** The casing **1a** also comprises a control circuit and DC voltage level indicating circuit similar to those shown in **Figures 2** and **3.**

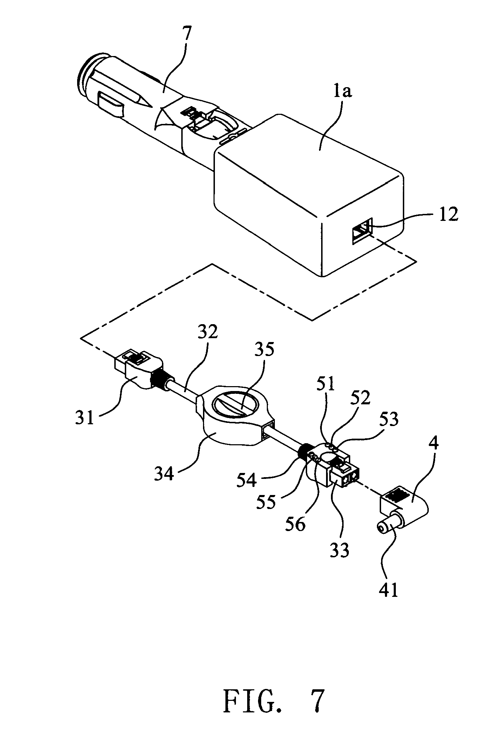

Please refer to **Figure 7,** which is a perspective view of a fourth embodiment of the power converter of the present invention. The fourth embodiment is different from the third embodiment in that the indicators **51~56** are provided at the appliance-side connector **33.** By means of the indicators **51~56,** the DC voltage output to the output terminal **41** of the level-selecting terminal device **4** is shown.

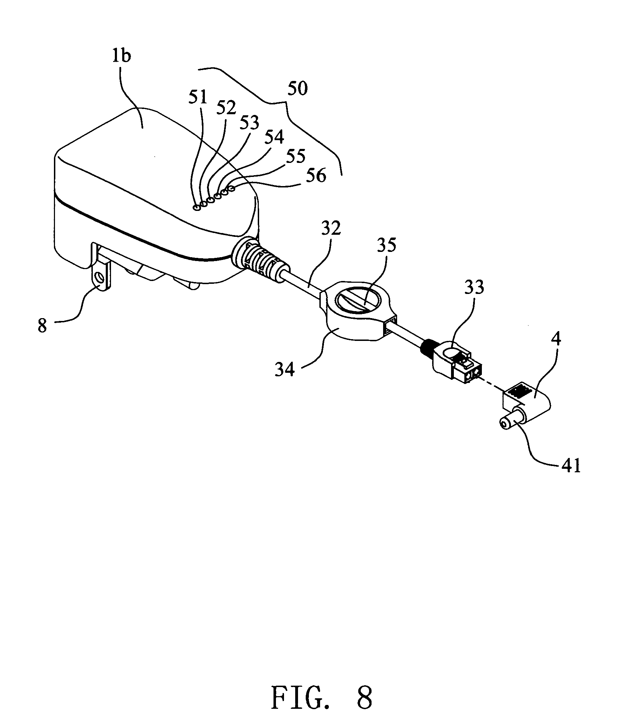

**Figure 8** is a perspective view of a fifth embodiment of the power converter. In this embodiment, the casing **1b** is formed with an AC plug **8** for engaging to an AC socket or electrical main, such as a wall outlet (not shown). Preferably, the AC plug **8** comprises a plurality of changeable pins for plugging to different types of sockets and power sources e.g. **110V** or **220V.**

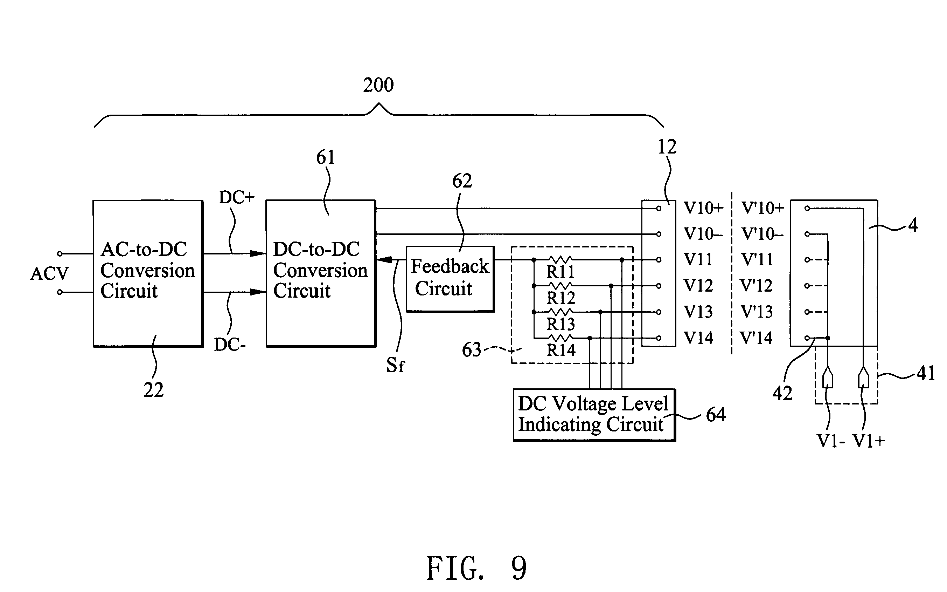

With reference to **Figure 9,** a block diagram of the control circuit of the fifth embodiment is shown. The control circuit of the fifth embodiment is substantially similar to the control circuit of the first embodiment shown in **Figure 2.** The control circuit **200** comprises a DC-to-DC conversion circuit **61,** a feedback circuit **62,** a resistor network **63** and a DC voltage level indicating circuit **64.** The control circuit **200** further comprises an AC-to-DC conversion circuit **22** which converts the AC supply from a power **ACV** into DC power that is then applied to the DC-to-DC conversion circuit **61.** The power converter **100** comprises the control circuit **200** and a DC voltage level indicating circuit that is substantially identical to that of the first embodiment as shown in **Figure 2.**

The casing **1b** is formed with a plurality of indicators **51~56** for showing the DC voltage output to the output terminal **41** of the level-selecting terminal device **4.**

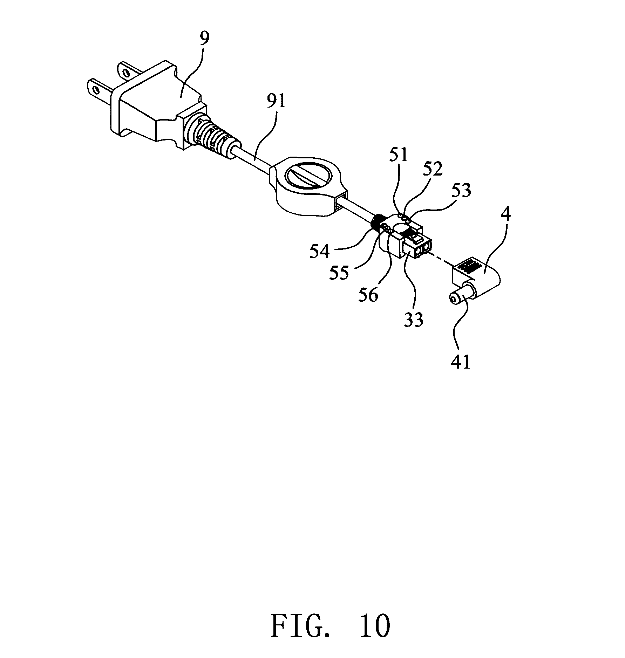

**Figure 10** shows a perspective view of a sixth embodiment of the power converter of the present invention. In this embodiment, the extension cable **91** has opposite ends forming an appliance-side connector **33** and a device-side plug **9,** respectively. The device-side plug **9** comprises a conventional AC plug for plugging to AC socket. The power converter **100** comprises a control circuit that is substantially identical to that shown in **Figure 2.** The appliance-side connector **33** is engageable with a level-selecting terminal device **4** for supplying a selectable DC voltage via the output terminal 41. The appliance-side connector **33** is provided with a plurality of indicators **51∼56** for showing the DC voltage output to the output terminal **41** of the level-selecting terminal device **4.**

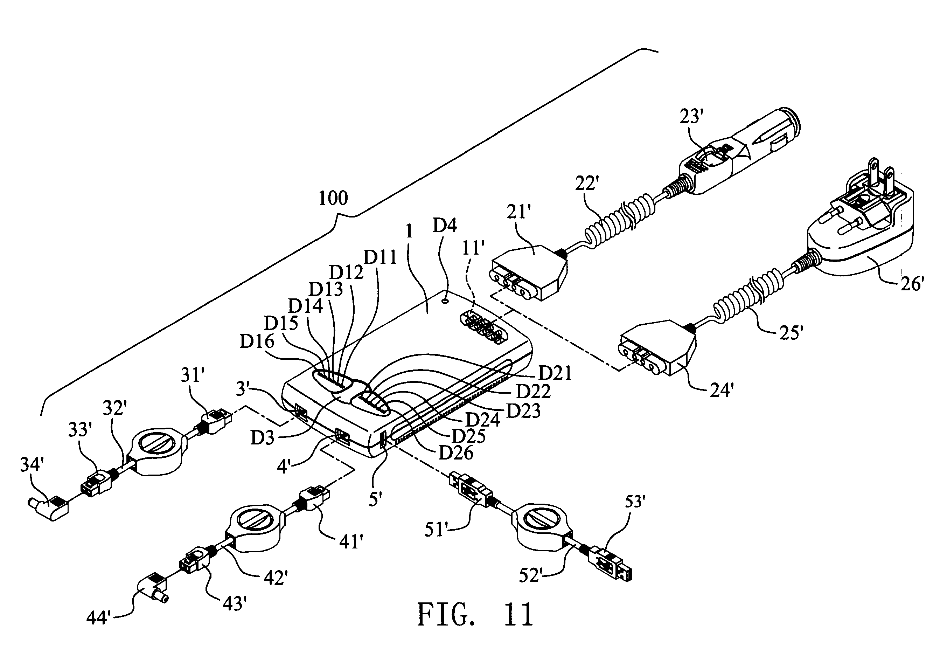

In addition, with reference to **Figure 11,** a seventh embodiment in accordance with the present invention provides a power converter generally designated with reference numeral **100.** The power converter **100** comprises a casing **1** that forms an input socket **11'** with which a plug **21'** of a power cord **22'** is engageable. The power cord **22'** has a proximal end forming the plug **21'** and a remote end forming a plug connector **23'** that is compatible to and engageable with a standard cigarette lighter socket provided in an automobile (both not shown). Thus, the power from an electrical system of an automobile can be supplied via the power cord **22'** to the power conversion device **100** of the present invention. The plug connector **23'** can also be configured to mate with a power socket provided in an airplane.

The power conversion device **100** is provided with an alternative power cord **25'** having opposite ends forming a plug **24'** that is engageable with the input socket **11'** of the casing **1** and a plug **26'** for selective engagement with an electrical main, such as a wall outlet (not shown). Preferably, the plug **26'** is of a universal design that is compatible with different types of wall outlet around the worlds, such as wall outlets of **110** and **220** volts.

The casing 1 forms first and second output sockets **3', 4',** both supplying direct current outputs. Two extension cables **32', 42'** are provided to respectively connect an electronic appliance (not shown) to the first and second output sockets **3', 4'.** The first extension cable **32'** has opposite ends forming a device-side plug **31'** and an appliance-side connector **33',** respectively. The device-side plug **31'** is engageable with the first output socket **3'** and the appliance-side connector **33'** is engageable with a first level-selecting terminal device **34',** which provides output voltage of **V1+, V1-** that is variable (to be further discussed hereinafter) to an electronic appliance powered by the power conversion device **100** via the first extension cable **32'.** Preferably, the first extension cable **32'** is releasably stowed in a cable-winding device (not labeled) to avoid entangling of the cable.

Similarly, the second extension cable **42'** has opposite ends forming a device-side plug **41'** and an appliance-side connector **43,** respectively. The device-side plug **41'** is engageable with the second output socket **4'** and the appliance-side connector **43'** is engageable with a second level-selecting terminal device **44',** which provides output voltage of **V2+, V2-** that is variable (to be further discussed hereinafter) to an electronic appliance powered by the power conversion device **100** via the second extension cable **42'.** Preferably, the second extension cable **42'** is releasably stowed in a cable-winding device (not labeled) to avoid entangling of the cable.

The casing 1 further forms a third output socket **5'** for powering an electronic appliance via a third extension cable **52'.** The third extension cable **52'** has opposite ends, respectively forming a device-side plug **51'** that is engageable with the third output socket 5' and an appliance-side USB (Universal Serial Bus) plug **53'** that supplies a constant direct current output of voltage **V3+, V3-** of for example **5** volts. Such a constant output can be used to power small-load appliance (not shown). Preferably, the third extension cable **52'** is releasably stowed in a cable-winding device (not labeled) to avoid entangling of the cable.

The casing 1 has a top face (not labeled) on which a display means is formed to indicate/display the output voltage level of each level-selecting terminal device **34', 44'.** For example, the display means may comprise a set of first indicators **D11-D16** associated with, and preferably adjacent to, the first output socket **3'** for indicating/displaying the voltage output **V1+, V1-,** and a set of second indicators **D21-D26** associated with, and preferably adjacent to, the second output socket **4'** for indicating/displaying the voltage output **V2+, V2-**. A further indicator **D3 is** arranged on the top face of the casing **1** for indicating normal/abnormal condition of the output voltage **V3+, V3-.** A power indicator **D4** is also provided on the top face of the casing **1** to indicate normal/abnormal input of power from an external power source through the input socket **11'.**

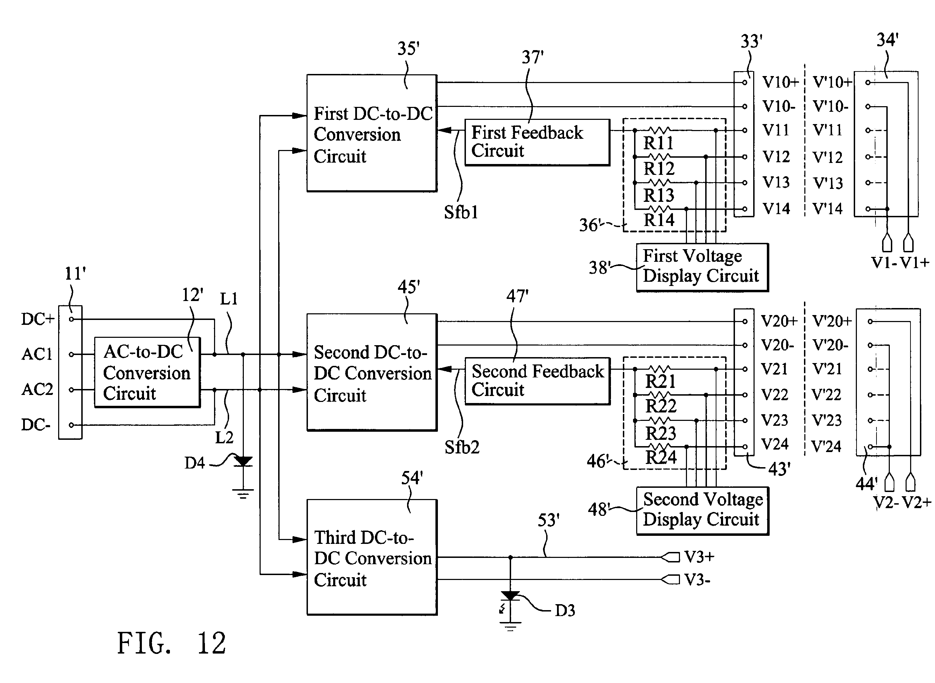

Also referring to **Figure 12,** which shows a block diagram of a control circuit of the power conversion device **1,** the input socket **11'** comprises direct current input terminals **DC+, DC-** and alternate current input terminals **AC1, AC2,** which are arranged to respectively receive electrical current from the plug **21'** of the power cord **22'** (DC input) powered by the cigarette lighter plug **23'** and the plug **24'** of the alternative power cord **25'** (AC input) powered by the AC power plug **26'** when the plugs **21', 24'** are alternately inserted into the input socket **11'.** The DC input terminals **DC+, DC-** are directly coupled to lines **L1, L2** of the control circuit, while the AC input terminals **AC1, AC2** are coupled to the lines **L1, L2** via a AC-to-DC conversion circuit **12',** which converts the AC input from the power cord **25'** into DC power that is then applied to the line L1, L2. Indicator **D4** indicates the normal operation of power receiving through the power cords **22', 25'.**

The control circuit comprises first, second, and third DC-to-DC conversion circuits **35', 45', 54',** respectively associated with the first, second, and third output sockets **3', 4', 5',** all connected to the line **L1, L2** to receive power from the input socket **11'.** With the device-side plug **31', 41', 51'** of each extension cable **32', 42', 52'** received in the associated output socket **3', 4', 5',** the first, second, and third DC-to-DC conversion circuits **35', 45', 54'** are respectively and electrically connected to the first, second, and third appliance-side connectors **33', 43', 53'.**

The first appliance-side connector **33'** comprises a pair of power terminals **V10+, V10-** coupled to the first DC-to-DC conversion circuit **35'.** A first resistor network **36'** and a first feedback circuit **37',** which are connected in series, are connected between the first appliance-side connector **33'** and the first DC-to-DC conversion circuit **35'** in parallel to the connection between the power terminals **V10+, V10-** and the first DC-to-DC conversion circuit **35'.** The first feedback circuit **37**' provides a first feedback signal **Sfb1** to the first DC-to-DC conversion circuit **35'.** The first resistor network **36'** is comprised of resistors **R11, R12, R13,** and **R14**, which are in turn connected to secondary, level-selecting terminals **V11**, **V12, V13,** and **V14** of the first appliance-side connector **33'.** A first voltage display circuit **38'** is connected to the secondary, level-selecting terminals **V11, V12, V13,** and V14 of the first resistor network **36'.**

The first level-selecting terminal device **34'** is comprised of a pair of power terminals **V'10+, V'10-,** and a plurality of level-selecting terminals **V'11, V'12, V'13,** and **V'14,** which respectively engage the power terminals **V10+, V10-,** and the corresponding level-selecting terminals **V11, V12, V13,** and **V14** of the first appliance-side connector **33',** when the first level-selecting terminal device **34'** mates the first appliance-side connector **33'.** By selective use of different jump connection between the level-selecting terminals **V'11, V'12, V'13,** and **V'14** and the power terminal **V'10-**, a different resistance is observed in the first resistor network **36',** which changes the first feedback signal **Sfb1** and thereby changes the output level of voltage at the output **V1+, V1-** of the first level-selecting terminal device **34'.** The output level of voltage at output **V1+, V1-** is displayed on the first voltage display device **38'.**

Similarly, the second appliance-side connector **43'** comprises a pair of power terminals **V20+**, **V20-** coupled to second DC-to-DC conversion circuit **45'.** A second resistor network **46'** and a second feedback circuit **47',** which are connected in series, are connected between the second appliance-side connector **43'** and the second DC-to-DC conversion circuit **45'** in parallel to the connection between the power terminals **V20+, V20-** and the second DC-to-DC conversion circuit **45'.** The second feedback circuit **47**' provides a second feedback signal **Sfb2** to the second DC-to-DC conversion circuit **45'.** The second resistor network **46'** is comprised of resistors **R21, R22, R23,** and **R24**, which are in turn connected to corresponding level-selecting terminals **V21, V22, V23,** and **V24** of the second appliance-side connector **43'.** A second voltage display circuit **48'** is connected to the level-selecting terminals **V21, V22, V23**, and **V24** of the second resistor network **46'.**

The second level-selecting terminal device **44'** is comprised of power terminals and level-selecting terminals **V'20+, V'20-, V'21, V'22, V'23, and V'24,** which respectively engage the power terminals and the level-selecting terminals **V20+, V20-, V21, V22, V23,** and **V24** of the second appliance-side connector **43',** when the second level-selecting terminal device **44'** mates the second appliance-side connector **43'.** By selective use of different jump connection between the level-selecting terminals **V'21, V'22, V'23,** and **V'24** and the power terminal **V'20-,** a different resistance is observed in the second resistor network **46',** which changes the second feedback signal **Sfb2** and thereby changes the output level of voltage at the output **V2+, V2-** of the second level-selecting terminal device **44'.** The output level of voltage at output **V2+, V2-** is displayed on the second voltage display device **48'.**

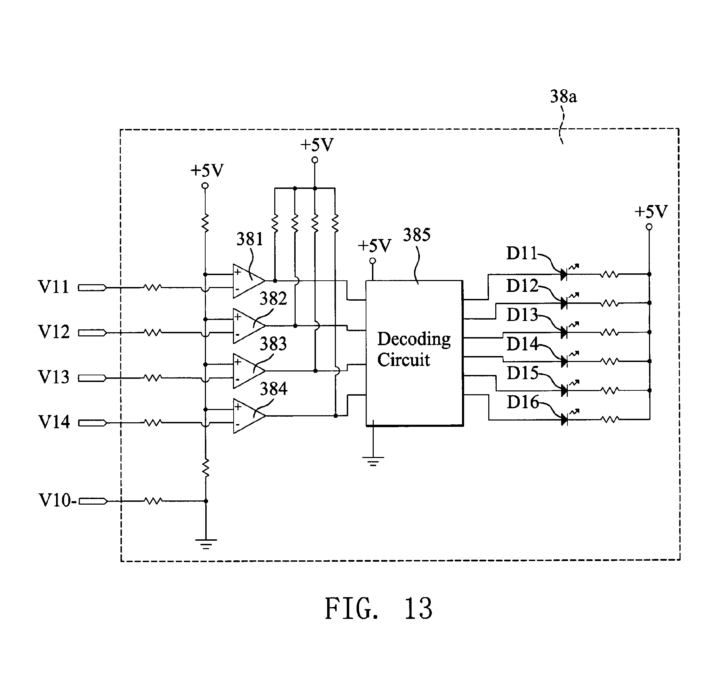

Also referring to **Figure 13,** a first arrangement of the control circuit of the first voltage display device **38'** comprises a circuit **38a** including operational amplifiers **381, 382, 383, 384,** each having a first input connected to the level-selecting terminals **V11, V12, V13,** and **V14** of the first resistor network **36'** whereby each operational amplifier **381, 382, 383, 384** and the associated resistor **R11, R12, R13, R14** forms a comparison circuit. Each operational amplifier **381, 382, 383, 384** has a second input connected to a power source of +5V Each operational amplifier **381, 382, 383, 384** has an output coupled to and applying an output signal to a decoding circuit **385,** which in turn generates output signals applied to and driving the indicators **D11-D16.** Thus, the indicators **D11-D16** shows to a user of the power converter **100** of the voltage level at the output **V1+, V1-.**

The circuit **38a** may also be applied to the second voltage display device **48'** and thus no further description of the detailed structure of the second voltage display device **48'** will be given hereinafter.

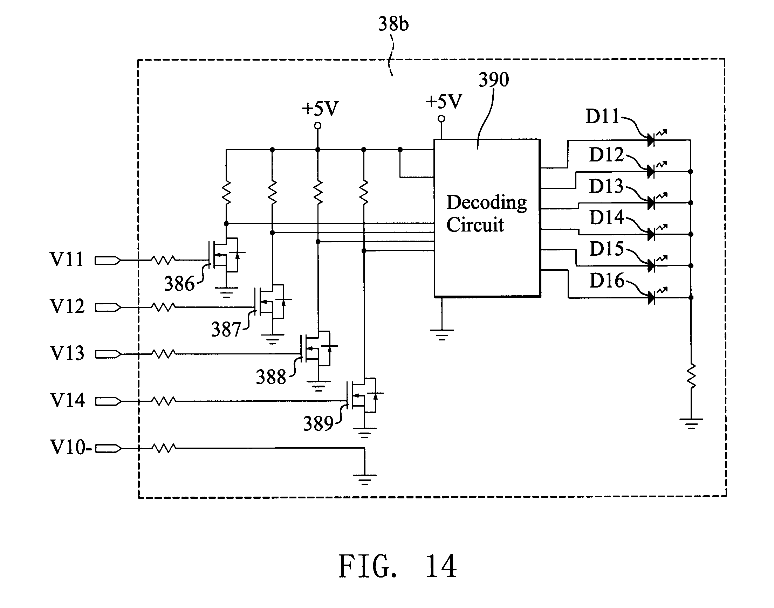

Also referring to **Figure 14,** a second arrangement of the control circuit of the first voltage display device **38'** comprises a circuit **38b** comprising transistors **386, 387, 388, 389** respectively connected to the level-selecting terminals **V11, V12, V13**, and **V14** of the first resistor network **36'.** Each transistor **386, 387, 388, 389** generates an output signal associated with ON/OFF state thereof and applies the output signal to a decoding circuit **390,** which in turn generates output signals applied to and driving the indicators **D11-D16.** Thus, the indicators **D11-D16** shows to a user of the power converter **100** of the voltage level at the output **V1+, V1-.** Again, the second voltage display circuit **48'** may incorporate the circuit **38b.**

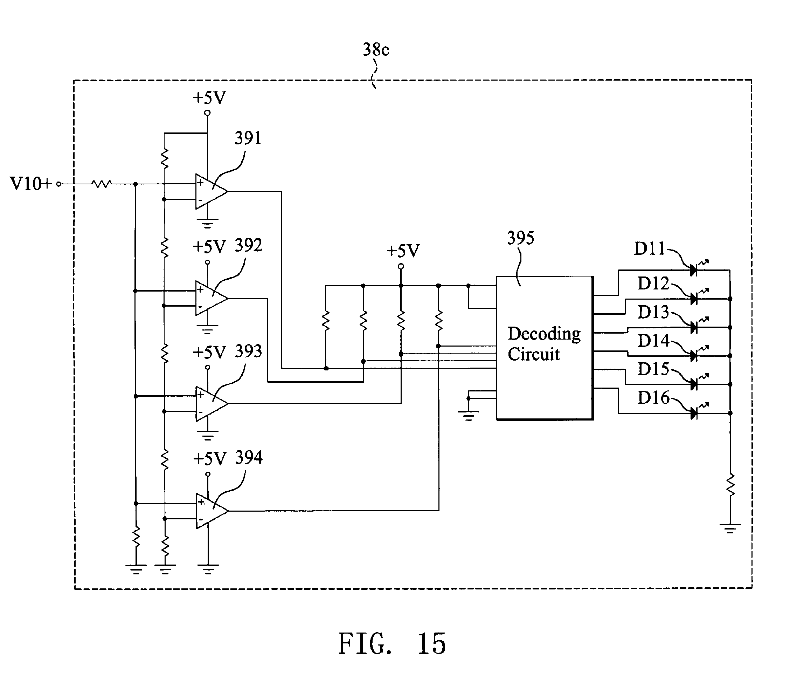

Also referring to **Figure 15,** a third arrangement of the control circuit of the first voltage display device **38**' comprises a circuit **38c** comprising operational amplifiers **391, 392, 393, 394** each having a first input commonly connected to the primary terminal **V10+** whereby the operational amplifiers. Each operational amplifier **391, 392, 393, 394** has an output coupled to and applying an output signal to a decoding circuit **395,** which in turn generates output signals applied to and driving the indicators **D11-D16.** Thus, the indicators **D11-D16** shows to a user of the power converter **100** of the voltage level at the output **V1+, V1-.** Again, the second voltage display circuit **48'** may incorporate the circuit 38c.

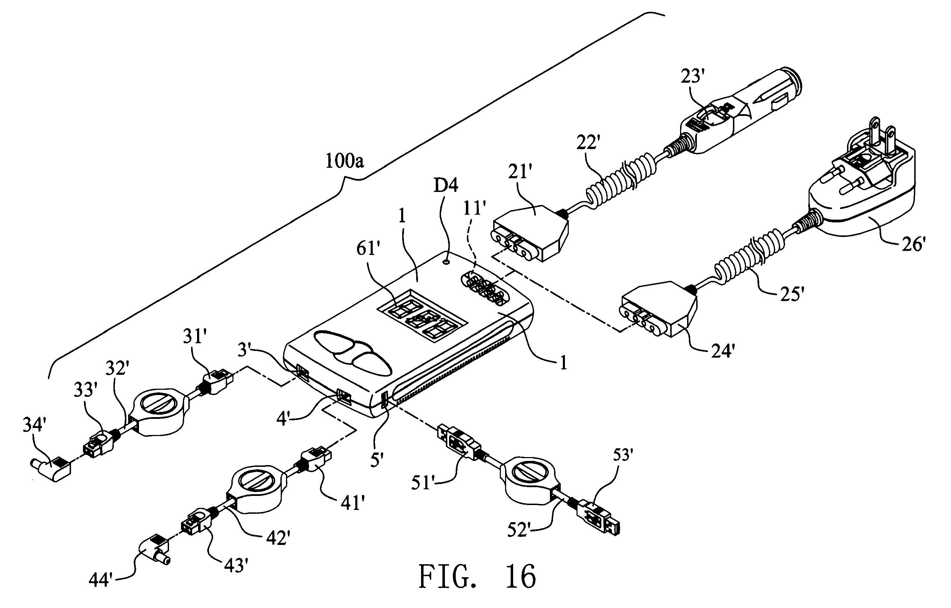

Also referring to **Figure 16,** a power converter constructed in accordance with an eighth embodiment of the present invention, generally designated with reference numeral **100a,** is shown. The power converter **100a** is substantially identical to the power converter **100** with reference to **Figures 11** and **12,** except that the first and second voltage display devices **38', 48'** comprise a liquid crystal display device **61'.** The outputs of the first and second level-selecting terminal device **34', 44'** are alternately displayed in the liquid crystal display **61'.** Alternatively, a manual switch (not shown) is provided to allow a user to selectively display the outputs of the first and second level-selecting terminal device **34', 44'.**

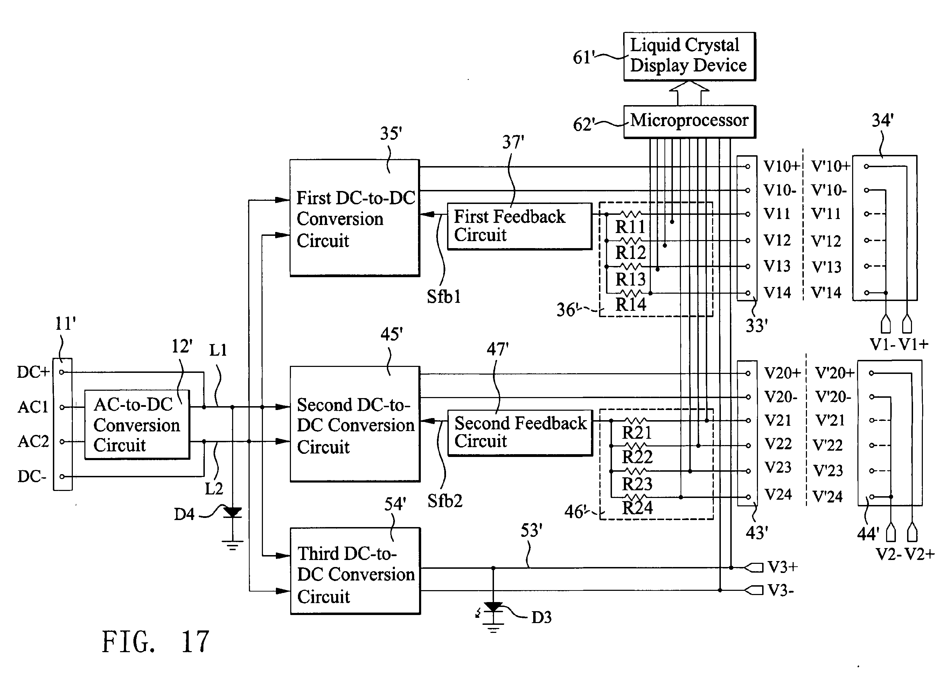

A block diagram of a control circuit of the power converter **100a** is shown in **Figure 17,** which is substantially identical to the control circuit of the power converter 100, except that a microprocessor **62'** is coupled, via any known interface, to the first and second resistor networks **36', 46',** as well as the third DC-to-DC conversion circuit **54'** to detect voltage level at the associated outputs. The microprocessor **62'** controls the liquid crystal display **61'** to display the voltage levels. The first and second voltage display circuits **38', 48'** of the power converter **100** are thus omitted here.

Although the present invention has been described with reference to the preferred embodiments thereof, it is apparent to those skilled in the art that a variety of modifications and changes may be made without departing from the scope of the present invention intended to be defined by the appended claims.

## Claims

1. A power converter comprising:
a casing;
at least one rechargeable battery, which is disposed in an interior of the casing for supplying a working power;
an output socket disposed at one side of the casing and connecting to a circuit board, which comprises a pair of power terminals and at least one level-selecting terminal;
the circuit board disposed at the interior of the casing, which comprises a control circuit including a feedback circuit and a DC-to-DC conversion circuit, in which the feedback circuit is coupled to the DC-to-DC conversion circuit and connected to the at least one level-selecting terminal;
a level-selecting terminal device, which is engageable with the output socket and comprises a pair of power terminals and at least one level-selecting terminal, and when the level-selecting terminal device is connected to the output socket, the power terminals and the at least one level-selecting terminal of the level-selecting terminal device are respectively connected to the power terminals and the at least one level-selecting terminal of the output socket for receiving the selectable DC voltage therefrom and transmitting the DC voltage through an output terminal of the level-selecting terminal device;
a display device, which is connected with the control circuit to display the voltage level of the DC output voltage at the output terminal of the level-selecting terminal device.

2. The power converter as claimed in Claim 1, wherein the display device comprises a plurality of indicators, each of which corresponds to a different DC voltage level for indicating the output voltage level from the output socket.

3. The power converter as claimed in Claim 1, wherein the display device comprises a liquid crystal display unit for displaying the output voltage level from the output socket.

4. The power converter as claimed in Claim 1, wherein the casing further comprises an input socket, with which a plug of a power cord connecting to an exterior power source is engageable for charging the rechargeable battery by a charging circuit.

5. The power converter as claimed in Claim 1, further comprising a connector connecting to a plug via an extension cable, the plug being engageable with the output socket of the casing and the connector comprising a pair of power terminals and at least one level-selecting terminal in corresponding to the power terminals and the at least one level-selecting terminal of the output socket.

6. The power converter as claimed in Claim 1, wherein each level-selecting terminal of the output socket being connected to the feedback circuit by a resistor, and the level-selecting terminal device comprises a plurality of jump connections, wherein by selective use of the jump connection, a different resistance is observed which changes the feedback signal and thereby changes the output level of voltage at the output terminal of the level-selecting terminal device.

7. The power converter as claimed in Claim 1, wherein the display device is disposed on a top of the casing.

8. The power converter as claimed in Claim 5, wherein the display device is disposed on the connector.

9. A power converter comprising:
a casing;
a cigarette lighter plug, which is incorporated with the casing for engaging into a corresponding cigarette socket thereby receiving a DC power therefrom;
an output socket disposing at one side of the casing and connecting to a circuit board, which comprises a pair of power terminals and at least one level-selecting terminal;
the circuit board disposing at the interior of the casing, which comprises a control circuit including a feedback circuit and a DC-to-DC conversion circuit, in which the feedback circuit is coupled to the DC-to-DC conversion circuit and connected to the level-selecting terminal;
a level-selecting terminal device, which is engageable with the output socket and comprises a pair of power terminals and at least one level-selecting terminal, and when the level-selecting terminal device is connected to the output socket, the power terminals and the at least one level-selecting terminal of the level-selecting terminal device are respectively connected to the power terminals and the at least one level-selecting terminal of the output socket for receiving the selectable DC voltage therefrom and transmitting the selectable DC voltage through an output terminal of the level-selecting terminal device;
a display device, which is connected with the control circuit to display the voltage level of the DC output voltage at the output terminal of the level-selecting terminal device.

10. The power converter as claimed in Claim 9, wherein the display device comprises a plurality of indicators, each of which corresponds to a different DC voltage level for indicating the output voltage level from the output socket.

11. The power converter as claimed in Claim 9, wherein the display device comprises a liquid crystal display unit for displaying the output voltage level from the output socket.

12. The power converter as claimed in Claim 9, wherein the power converter further comprises a connector connecting to a plug via an extension cable, the plug being engageable with the output socket of the casing and the connector comprising two primary, power terminals and at least one secondary, level-selecting terminal in corresponding to the primary and secondary terminals of the output socket.

13. The power converter as claimed in Claim 9, wherein the output socket each level-selecting terminal of the output socket being connected to the feedback circuit by a resistor, and the level-selecting terminal device comprises a plurality of jump connections, wherein by selective use of the jump connection, a different resistance is observed which changes the feedback signal and thereby changes the output level of voltage at the output terminal of the level-selecting terminal device.

14. The power converter as claimed in Claim 9, wherein the display device is disposed on a top of the casing.

15. The power converter as claimed in Claim 12, wherein the display device is disposed on the connector.

16. A power converter comprising:
a casing;
an alternating current plug, which is incorporated with the casing and is engageable with an AC socket for receiving an AC power therefrom;
an output socket disposing at one side of the casing and connecting to a circuit board, which comprises a pair of power terminals and at least one level-selecting terminal;
the circuit board disposing at the interior of the casing, comprising a control circuit and an AC-to-DC conversion circuit, in which the control circuit includes a feedback circuit and a DC-to-DC conversion circuit, and the feedback circuit is coupled to the DC-to-DC conversion circuit and connected to the at least one level-selecting terminal, and the AC-to-DC conversion circuit converts the AC power from AC socket into DC power;
a level-selecting terminal device, which is engageable with the output socket and comprises a pair of power terminals and at least one level-selecting terminal, and when the level-selecting terminal device is connected to the output socket, the power terminals and the at least one level-selecting terminal of the level-selecting terminal device are respectively connected to the power terminals and the at least one level-selecting terminal of the output socket for receiving the selectable DC voltage therefrom and transmitting the selectable DC voltage through an output terminal of the level-selecting terminal device;
a display device, which is connected with the control circuit to display the voltage level of the DC output voltage at the output terminal of the level-selecting terminal device.

17. The power converter as claimed in Claim 16, wherein the display device comprises a plurality of indicators, each of which corresponds to a different DC voltage level for indicating the output voltage level from the output socket.

18. The power converter as claimed in Claim 16, wherein the display device comprises a liquid crystal display unit for displaying the output voltage level from the output socket.

19. The power converter as claimed in Claim 16, wherein the power converter further comprises a connector connecting to a plug via an extension cable, the plug being engageable with the output socket of the casing and the connector comprising a pair of power terminals and at least one level-selecting terminal in corresponding to the power terminals and the at least one level-selecting terminal of the output socket.

20. The power converter as claimed in Claim 16, wherein each level-selecting terminal of the output socket being connected to the feedback circuit by a resistor, and the level-selecting terminal device comprises a plurality of jump connections, wherein by selective use of the jump connection, a different resistance is observed which changes the feedback signal and thereby changes the output level of voltage at the output terminal of the level-selecting terminal device.

21. The power converter as claimed in Claim 16, wherein the display device is disposed on a top of the casing.

22. The power converter as claimed in Claim 16, wherein the display device is disposed on the connector.

23. A power converter comprising:
an output socket comprising a pair of power terminals and at least one level-selecting terminal;
a circuit board comprising a control circuit including a feedback circuit and a DC-to-DC conversion circuit, in which the feedback circuit is coupled to the DC-to-DC conversion circuit and connected to the level-selecting terminal;
a level-selecting terminal device, which is engageable with the output socket and comprises a pair of power terminals and at least one level-selecting terminal, and when the level-selecting terminal device is connected to the output socket, the primary and secondary terminals of the level-selecting terminal device are respectively connected to the power terminals and the at least one level-selecting terminal of the output socket for receiving the selectable DC voltage therefrom and transmitting the DC voltage through an output terminal of the level-selecting terminal device;
a display device, which is connected with the control circuit to display the voltage level of the DC output voltage at the output terminal of the level-selecting terminal device.

24. The power converter as claimed in Claim 23, wherein the display device comprises a plurality of indicators, each of which corresponds to a different DC voltage level for indicating the output voltage level from the output socket.

25. The power converter as claimed in Claim 23, wherein the display device comprises a liquid crystal display unit for displaying the output voltage level from the output socket.

26. A power converter comprising:
a voltage conversion circuit adapted to receive a DC power input from an external power source and converting the input into a DC output of a predetermined voltage level;
an output connector receiving the DC output and comprising a pair of power terminals to transmit the DC output and at least one level-selecting terminal;
a level-selecting terminal device comprising a pair of power terminals and at least one level-selecting terminal, when the level-selecting terminal device being selectively mateable with the output connector, the power terminals and the at least one level-selecting terminal thereof engaging with the power terminals and the at least one level-selecting terminal of the output connector respectively;
a feedback circuit coupled to the voltage conversion circuit and connected to each level-selecting terminal, wherein, in response to the connection between the at least one level-selecting terminal and the power terminals of the level-selecting terminal device, the feedback circuit generates and applies a feedback signal to the voltage conversion circuit which in turn changes the voltage level of the DC output; and
a display circuit, which is coupled to-the output connector to display the voltage level of the DC output at the power terminals of the output connector.

27. The power converter as claimed in Claim 26, wherein the display circuit comprises a plurality of indicators connected to the at least one level-selecting terminal of the output connector to indicate the voltage level of the DC output transmitted through the output connector.

28. The power converter as claimed in Claim 26, wherein the display circuit comprises a liquid crystal display unit to selectively display the voltage level of the DC output transmitted through the output connector.

29. The power converter as claimed in Claim 26 further comprising a USB connector that is electrically coupled to an additional voltage conversion circuit that receives the input power whereby the USB connector is adapted to selectively connect to and supply a constant DC voltage to an external load.

30. The power converter as claimed in Claim 26, wherein the voltage conversion circuit is a DC-to-DC conversion circuit.

31. The power converter as claimed in Claim 26, wherein the feedback circuit has at least a resistor having a predetermined resistance, which connects to the at least one level-selecting terminal, in response to the connection between the at least one level-selecting terminal and the power terminals of the level-selecting terminal device and based on the predetermined resistance of the resistor, the feedback circuit generates and applies the feedback signal to the power conversion circuit.

32. A power converter comprising:
a plurality of voltage conversion circuits adapted to respectively receive a DC power input from an external power source and each converting the input into a DC output of a predetermined voltage level via a power supply circuit;
wherein each power supply circuit including:
an output connector receiving the DC output of the associated voltage conversion circuit, the output connector comprising a pair of power terminals to transmit the DC output and at least one level-selecting terminal,
a level-selecting terminal device comprising a pair of power terminals and at least one level-selecting terminal, the level-selecting terminal device being selectively mateable with the output connector to have the power terminals and the at least one level-selecting terminal thereof engaging the corresponding power terminals and the at least one level-selecting terminal of the output connector, respectively, and
a feedback circuit coupled to the associated voltage conversion circuit and connected to the at least one level-selecting terminal of the output connector, wherein, the feedback circuit generates and applies a feedback signal to the associated voltage conversion circuit which in turn changes the voltage level of the DC output thereof via the output connector; and
a display circuit coupled to the output connector to selectively display the voltage level of the DC output at the power terminals of the output connector.

33. The power conversion device as claimed in Claim 32, wherein the display circuit comprises a plurality of indicators connected to the at least one level-selecting terminal of the output connector to indicate the voltage level of the DC output transmitted through the output connector.

34. The power conversion device as claimed in Claim 32, wherein the display circuit comprises a liquid crystal display unit to selectively display the voltage level of the DC output transmitted through each output connector.

35. The power conversion device as claimed in Claim 32 further comprising a USB connector that is electrically coupled to an additional DC-to-DC conversion circuit that receives the input power whereby the USB connector is adapted to selectively connect to and supply a constant DC voltage to an external load.

36. The power conversion device as claimed in Claim 32, wherein the voltage conversion circuit is a DC-to-DC conversion circuit.

37. The power conversion device as claimed in Claim 32, wherein the feedback circuit has at least one resistor having a predetermined resistance; the at least one resistor is connected between the at least one level-selecting terminal of the output connector and the power conversion circuit; and based on the predetermined resistance of the resistor, the feedback circuit generates and applies the feedback signal to the power conversion circuit.

38. A power converter comprising:
a casing forming a power input socket adapted to receive a power plug that is connected to an external power source and at least one power output socket;
at least one DC output connector electrically coupled to each power output socket by a plug member of an extension cable, each DC output connector having a level-selecting terminal device for outputting a selectable DC output voltage;
a display unit, which is arranged on the casing to selectively display the level of the output voltage according to the output voltages by corresponding level-selecting terminal devices of the at least one DC output connectors.

39. The power conversion device as claimed in Claim 38, wherein the display unit comprises plural indicators that indicate the levels of the output voltage at the power terminals of the level-selecting terminal devices.

40. The power conversion device as claimed in Claim 38, wherein the display unit comprises a liquid crystal display to selectively display the levels of the output voltages at the power terminals of the level-selecting terminal devices.

41. The power conversion device as claimed in Claim 38 further comprising a DC output socket that supplies a constant output voltage and an extension cable having a plug mateable with the DC output socket and a USB connector adapted to supply the constant output voltage to an external load.
